# EUROPÄISCHE PATENTSCHRIFT

(11) **EP 2 195 596 B1**
(45) Veröffentlichungstag und Bekanntmachung des Hinweises auf die Patenterteilung: **03.08.2011**
(21) Anmeldenummer: 08806896.0
(22) Anmeldetag: 21.08.2008
(51) Int. Cl.: F27B 7/20, F16K 3/02, C04B 7/47

(54) **EINRICHTUNG ZUM DROSSELN VON HEIßEN, STAUBBELASTETEN GASSTRÖMEN**
DEVICE FOR RESTRICTING HOT, DUST-LADEN GAS FLOWS
DISPOSITIF D'ÉTRANGLEMENT DE FLUX GAZEUX CHAUDS, CHARGÉS EN POUSSIÈRES

(30) Priorität: 27.08.2007 AT 13392007
(43) Veröffentlichungstag der Anmeldung: 16.06.2010
(73) Patentinhaber: Holcim Technology Ltd., 8645 Jona (CH)
(72) Erfinder: GASSER, Urs, CH-5235 Rüfenach (CH)
(74) Vertreter: Haffner und Keschmann Patentanwälte OG
(86) Internationale Anmeldenummer: PCT/IB2008/002172
(87) Internationale Veröffentlichungsnummer: WO 2009/027787

(56) Entgegenhaltungen:
- DE-A1- 3 330 607
- DE-C- 856 190
- US-A- 1 678 342
- US-A- 1 995 845
- US-A1- 2002 022 207

## Beschreibung

Die Erfindung bezieht sich auf eine Einrichtung zum Drosseln von heißen, staubbelasteten Gasströmen, insbesondere von staubbelasteter heißer Kühlluft aus Klinkerkühlern in einem Tertiärluftkanal eines Klinkerofens.

Bei der Klinkerherstellung stellt der Energieaufwand für das Präkalzinieren bzw. Kalzinieren der Charge einen wesentlichen Kostenfaktor dar. Vorkalzinierer benötigen in aller Regel in derartigen Anlagen mehr als 60 % des Gesamtwärmeeinbringens, wobei Klinker nach dem Verlassen des Drehrohrofens bzw. Klinkerofens in einen Klinkerkühler gelangt. In derartigen Klinkerkühlern wird mit Umgebungsluft, d.h. mit vergleichsweise kalter Luft gekühlt, wobei erhebliche Mengen an Kühlluft entsprechend erwärmt werden. Vorkalzinierer benötigen nun relativ hohe Mengen an Verbrennungsluft, wobei die Verwendung von vorgewärmte Luft energetisch besonders günstig ist. Zu diesem Zweck verfügen Klinkeröfen, welchen Vorkalzinierer vorgeschaltet sind, in aller Regel über einen sogenannten Tertiärluftkanal, über welchen Abluft aus der heißen Zone des Klinkerkühlers dem Vorkalzinierer als Verbrennungsluft rückgeführt wird.

Über Tertiärluftkanäle muss aber zur optimalen Fahrweise einer derartigen Anlage die jeweils dem Kalzinierer zugeführte Luftmenge entsprechend der verwendeten Brennstoffmenge eingestellt werden, wobei aus dem Klinkerkühler in aller Regel Abluft mit Temperaturen zwischen 650 und 1100° C mit einem hohen Klinkerstaubanteil abgezogen werden kann. Die üblicherweise hier vorgesehenen Drosselklappen sind bedingt durch die hohen Temperaturen und die hohe Staubbelastung einem überaus hohen Verschleiß ausgesetzt, sodass derartige Anlagen zu Wartungszwecke immer wieder stillgesetzt werden müssen, um die Drosselklappen zu warten bzw. zu tauschen.

Die DE 102006023980 A1 beschreibt beispielsweise eine Drosselklappe, welche durch ein Element gebildet wird, das zur Einstellung des Querschnittes einer Kalzinatordüse drehbar bzw. schwenkbar in der Kalzinatordüse angebracht ist.

Die US 2002022207 A1 beschreibt eine in eine Abgasleitung eines Drehrohrofens eingeschaltete schwenkbare Drosselklappe, welche von einem seitlich angebrachten Angelpunkt in die Abgasleitung geschwenkt werden kann, wobei in jeder Schwenklage die Abgasströmung laminar fließt.

Die Erfindung zielt nun darauf ab, eine Einrichtung zum Drosseln von heißen, staubbelasteten Gasströmen der eingangs genannten Art zu schaffen, welche ohne Betriebsunterbrechung über lange Zeiten betrieben werden kann und bei welcher Wartungs- und Instandsetzungsarbeiten ohne Unterbrechung des Betriebs vorgenommen werden können. Zur Lösung dieser Aufgabe besteht die erfindungsgemäße Ausbildung der Drosseleinrichtung im Wesentlichen darin, dass die Drossel von quer zur Strömungsrichtung in einem Kanal verschiebbaren Segmenten gebildet ist, welche miteinander und mit einem Verschiebeantrieb verbindbar sind. Dadurch, dass die Drossel von quer zur Strömungsrichtung in einem Kanal verschiebbaren Segmenten gebildet ist, können in den Kanal und insbesondere in den Tertiärluftkanal die einzelnen Segmente eingeschoben werden, wobei immer dann, wenn derartige Segmente an ihren einem besonderen Verschleiß unterworfenen Rändern unbrauchbar geworden sind, einfach frische Segmente nachgebaut werden können und von außen wieder eingeschoben werden können. Zu diesem Zweck sind die Segmente miteinander verbindbar und entsprechend auch lösbar miteinander verbunden, um den Antrieb jeweils außer Eingriff bringen zu können und neue Segmente einzuschalten. Eine besonders einfache Wartung und ein sicherer Betrieb lassen sich dadurch gewährleisten, dass die Segmente gelenkig miteinander verbunden sind, wobei vorzugsweise ein Verschiebeantrieb der Segmente zum Einbau weiterer Segmente von den Segmenten lösbar und mit dem oder den weiteren Segment(en) wieder verbindbar ist.

Der erfindungsgemäße Gasregelschieber kann mit Vorteil so eingesetzt werden, dass Mittel zum Festhalten der Segmente in ihrer jeweiligen Position vorgesehen sind. Dies erlaubt ein Abkuppeln bzw. Lösen des Antriebes und eine neuerliche Verbindung des Antriebes mit dem durch Anfügen von Segmenten verlängerten Ende des Gasregelschiebers.

Die einzelnen Segmente des guillotineartigen Schließglieds können in besonders vorteilhafter Weise von keramischen Elementen und/oder von Stahlsegmenten gebildet sein. Um einen sicheren Betrieb und eine exakte Drosselung zu gewährleisten ist die Ausbildung mit Vorteil so getroffen, dass die Segmente in oder an quer zur Strömungsrichtung verlaufenden Führungen abgestützt bzw. geführt sind.

Wie eingangs erwähnt, kann die erfindungsgemäße Einrichtung mit besonderem Vorteil in Klinkeranlagen verwendet werden, wobei die Ausbildung hier mit Vorteil so getroffen ist, dass die Drossel in einem Tertiärluftkanal eines Klinkerofens nahe dem Gaseinlass eines Vorkalzinierers angeordnet ist.

In besonders vorteilhafter Weise erfolgt die Anordnung so, dass die Segmente in dem Kanal hängend angeordnet und in im Wesentlichen vertikaler Richtung verschiebbar sind, sodass eine unerwünschte, strömungsbedingte Materialanhäufung in Strömungsrichtung nach der Drosseleinrichtung hintangehalten werden kann.

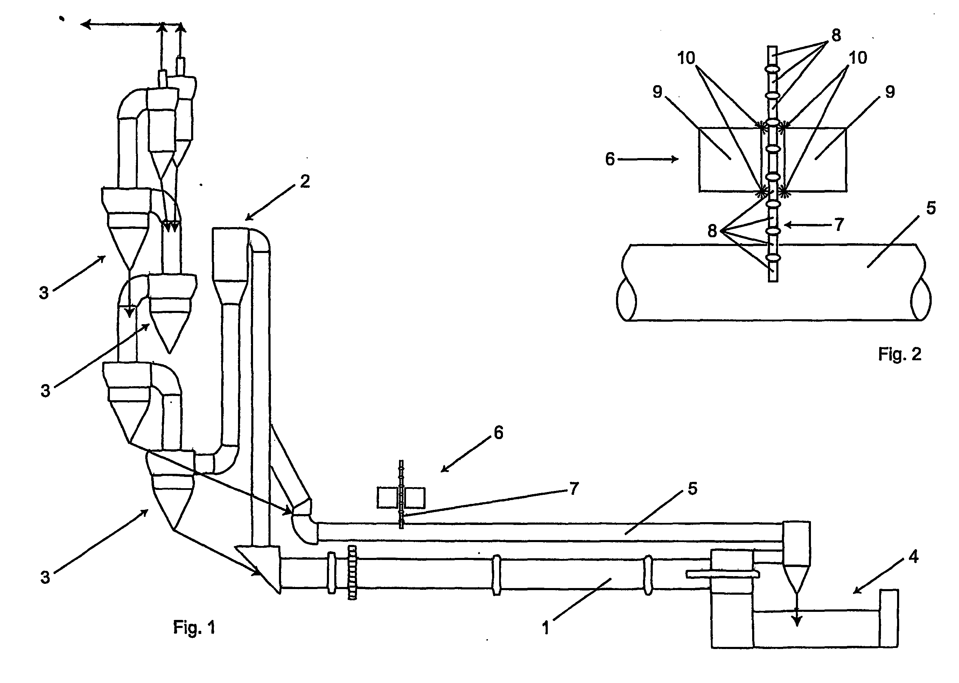

Die Erfindung wird nachfolgend anhand eines in der Zeichnung schematisch dargestellten Ausführungsbeispiels näher erläutert. In dieser zeigen Fig. 1 eine schematische Ansicht einer Anlage zur Klinkerherstellung und Fig. 2 ein vergrößertes Detail der verstellbaren Drosseln.

In Fig. 1 ist mit 1 ein Drehrohrofen bezeichnet, welcher für die Herstellung von Klinker verwendet wird. Das Aufgabegut wird in einem Vorkalzinierer 2 kalziniert, wobei weiters eine Vorwärmung in einer mehrstufigen Anordnung von Schwebegaswärmetauschern 3 vorgenommen wird. Dem Drehrohrofen 1 bzw. Klinkerofen 1 nachgeschaltet ist ein Klinkerkühler 4, welcher mit Luft gekühlt wird, wobei die entsprechend erwärmte Abluft über einen Tertiärluftkanal 5 dem Vorkalzinierer 2 rückgeführt wird. In diesen Tertiärluftkanal 5 ist nun eine verstellbare Drossel 6 eingeschaltet, deren nach Art eines Schiebers 7 ausgebildetes Drosselglied von einer Mehrzahl von Segmenten gebildet ist. Die Drossel 6 ist in Fig. 2 vergrößert dargestellt.

In Fig. 2 sind die einzelnen Segmente 8 des guillotineartig betätigten Schieberventils ersichtlich und es ist weiters ein Antrieb 9 vorgesehen, welcher über einen entsprechenden kraftschlüssigen Eingriff 10 mit dem Schieber 7 zusammenwirkt. Wenn nun im Zuge des Verschleißes durch- staubbelastete heiße Luft im Tertiärluftkanal 5 das unterste Segment erodiert, kann ein entsprechendes weiteres Segment 8 am anderen Ende des Schiebers 7 außerhalb des Tertiärluftkanals angefügt werden. Für die Dauer dieser Arbeiten wird der Schieber 7 in seiner momentanen Stellung fixiert, damit er vom Antrieb 9 getrennt werden kann. Nach Abschluss der Arbeiten wird der Antrieb 9 so nachgestellt, dass er mit dem jetzt längeren Schieber 7 wieder verbunden werden kann, ohne dessen Position zu verändern. Es kann somit ohne komplizierten Ausbau eine Ergänzung des Schiebers in dem Ausmaß vorgenommen werden, in welchem der Verschleiß die jeweils in den Tertiärluftkanal 5 eintauchenden Segmente unbrauchbar gemacht hat ohne den Ofenbetrieb zu unterbrechen-.

Der mit 10 angedeutete kraftschlüssige Eingriff kann als Feststelleinrichtung für die jeweilige Position der Segmente ausgebildet sein, wobei der Antrieb bei Festlegen der Segmente in ihrer Position abgenommen werden kann und mit dem durch Anfügen von Segmenten verlängerten Ende neuerlich verbunden werden kann. Auf diese Weise kann ein einfacher Antrieb und eine einfache Konstruktion der Segmente gewählt werden.

## Patentansprüche

1. Einrichtung zum Drosseln von heißen, staubbelasteten Gasströmen, insbesondere von staubbelasteter heißer Kühlluft aus Klinkerkühlern in einem Tertiärluftkanal eines Klinkerofens mit einem nach Art eines Schiebers ausgebildeten Drosselglied und einem Verschiebeantrieb, welcher über einen kraftschlüssigen Eingriff mit dem Drosselglied zusammenwirkt, wobei das Drosselglied (6) von quer zur Strömungsrichtung in einem Kanal (5) verschiebbaren Segmenten (8) gebildet ist, welche miteinander und mit dem Verschiebeantrieb (9) verbindbar sind, **dadurch gekennzeichnet, dass** der Verschiebeantrieb (9) der Segmente (8) zum Einbau weiterer Segmente (8) von den Segmenten (8) lösbar und mit dem oder den weiteren Segment(en) (8) wieder verbindbar ist und dass Mittel zum Festhalten der Segmente (8) bei von den Segmenten abgelöstem verschiebeantrieb in deren jeweiliger Position vorgesehen sind.

2. Einrichtung nach Anspruch 1, **dadurch gekennzeichnet, dass** die Segmente (8) gelenkig miteinander verbunden sind.

3. Einrichtung nach einem der Ansprüche 1 oder 2, **dadurch gekennzeichnet, dass** die Segmente (8) von keramischen Elementen und/oder von Stahlsegmenten gebildet sind.

4. Einrichtung nach einem der Ansprüche 1 bis 3, **dadurch gekennzeichnet, dass** die Segmente (8) in oder an quer zur Strömungsrichtung verlaufenden Führungen abgestützt bzw. geführt sind.

5. Einrichtung nach einem der Ansprüche 1 bis 4, **dadurch gekennzeichnet, dass** die Drossel (6) in einem Tertiärluftkanal (5) eines Klinkerofens (1) nahe dem Lufteinlass eines Vorkalzinierers (2) oder der Luftentnehmer beim Küchler (4) angeordnet ist.

6. Einrichtung nach einem der Ansprüche 1 bis 5, **dadurch gekennzeichnet, dass** die Segmente (8) in dem Kanal (5) hängend angeordnet und in im Wesentlichen vertikaler Richtung verschiebbar sind.

7. Einrichtung nach einem der Ansprüche 1 bis 6, **dadurch gekennzeichnet, dass** der Verschiebeantrieb mit den Segmenten in Eingriff bringbar ist.

## Claims

1. A device for restricting hot, dust-laden gas flows and, in particular, dust-laden hot cooling air from clinker coolers in a tertiary air duct of a clinker kiln with a restrictor devised as a slider and a displacement drive which cooperates with the restrictor via a force-locking meshing, whereby the restrictor is formed by segments which are displaceable transversely to the direction of flow in a duct and which are connectable with one another and with a displacement drive, **characterized in that** the displacement drive (9) of the segments (8) is detachable from the segments (8) for the installation of further segments (8) and reconnectable with the or the further segment(s) (8) and **in that** means for retaining the segments (8) in their respective positions are provided.

2. A device according to claim 1, **characterized in that** the segments (8) are articulately connected with one another.

3. A device according to claim 1 or 2, **characterized in that** the segments (8) are formed of ceramic elements and/or steel segments.

4. A device according to claim 1, 2 or 3, **characterized in that** the segments (8) are supported or guided in or on guides extending transversely to the direction of flow.

5. A device according to claims 1 to 3, **characterized in that** the restrictor (6) is arranged in a tertiary air duct (5) of a clinker kiln (1) near the air inlet of a precalciner (2) or the air extractors at the cooler (4).

6. A device according to any one of claims 1 to 5, **characterized in that** the segments (8) are arranged to suspend from the duct (5) and displaceable in a substantially vertical direction.

7. A device according to any one of claims 1 to 6, **characterized in that** the displacement drive can be coupled with the segments.

## Revendications

1. Dispositif pour l'étranglement de flux de gaz chauds, chargés de poussières, en particulier d'air de refroidissement chaud chargé de poussières provenant de refroidisseurs de clinker, dans un canal d'air tertiaire d'un four à clinker, comprenant un organe d'étranglement conçu à la manière d'une vanne et un entraînement en translation qui coopère avec l'organe d'étranglement par le biais d'une mise en prise par action de force, l'organe d'étranglement (6) étant constitué de segments (8) pouvant être déplacés en translation transversalement à la direction de l'écoulement dans un canal (5) et qui peuvent être reliés entre eux et à l'entraînement en translation (9), **caractérisé en ce que** l'entraînement en translation (9) des segments (8) peut être détaché des segments (8) pour l'insertion d'autres segments (8) et de nouveau relié à l'autre ou aux autres segment(s) (8) et **en ce qu'**il est prévu des moyens pour immobiliser les segments (8) dans la position qu'ils occupent respectivement lorsque l'entraînement de translation est détaché des segments.

2. Dispositif selon la revendication 1, **caractérisé en ce que** les segments (8) sont reliés entre eux de manière articulée.

3. Dispositif selon l'une des revendications 1 ou 2, **caractérisé en ce que** les segments (8) sont constitués d'éléments en céramique et/ou de segments en acier.

4. Dispositif selon l'une des revendications 1 à 3, **caractérisé en ce que** les segments (8) sont appuyés contre, ou guidés dans, des guides s'étendant transversalement à la direction d'écoulement.

5. Dispositif selon l'une des revendications 1 à 4, **caractérisé en ce que** l'étranglement (6) est disposé dans un canal d'air tertiaire (5) d'un four à clinker (1) à proximité de l'entrée d'air d'un précalcinateur (2) ou de la prise d'air dans la région du refroidisseur (4).

6. Dispositif selon l'une des revendications 1 à 5, **caractérisé en ce que** les segments (8) sont suspendus dans le canal (5) et peuvent être déplacés en translation dans une direction sensiblement verticale.

7. Dispositif selon l'une des revendications 1 à 6, **caractérisé en ce que** l'entraînement en translation peut être mis en prise avec les segments.
